# EUROPEAN PATENT SPECIFICATION

(11) **EP 1 762 457 B1**
(45) Date of publication and mention of the grant of the patent: **08.07.2015**
(21) Application number: 06004233.0
(22) Date of filing: 02.03.2006
(51) Int. Cl.: B62B 7/06

(54) **Safety device used in combination with frame assembly**
Sicherheitsvorrichtung zum Gebrauch in Kombination mit einer Rahmenstruktur
Dispositif de sécurité utilisé en combinaison avec un ensemble châssis

(30) Priority: 12.09.2005 CN 200520107251
(43) Date of publication of application: 14.03.2007
(73) Proprietor: Wonderland Nurserygoods Co., Ltd., Taipei 114 (TW)
(72) Inventor: Chen, Shun-Min, Neihu, Taipei 114 (TW); Li, Ru Yi, Neihu, Taipei 114 (TW)
(74) Representative: Banzer, Hans-Jörg

(56) References cited:
- EP-A- 1 232 927
- EP-A- 1 445 167
- EP-A- 1 733 948
- DE-U1-202005 001 871

## Description

### Field of the Invention

The present invention relates generally to a safety device used in combination with a frame assembly, and more particularly to a safety device used in combination with a locking device which can control a frame assembly being collapsed and stretched. The frame assembly may be a part of a stroller or an umbrella push-chair.

### Background of the Invention

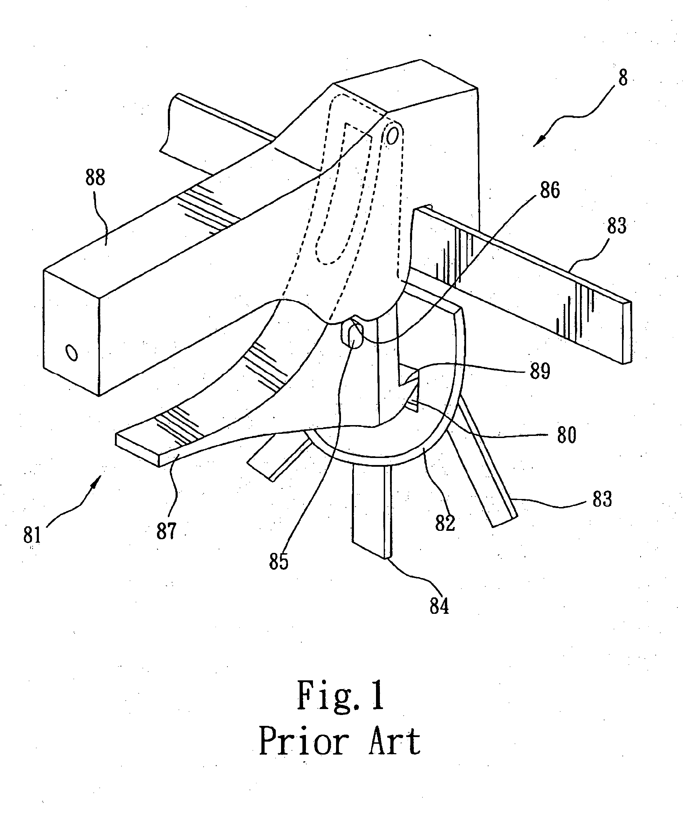

As shown in Fig. 1, a conventional locking device 81 for operating a conventional frame assembly 8 of a stroller or an umbrella push-chair being collapsed and stretched was disclosed in European Patent No. EP 1232927 A1. In the conventional locking device 81, a tooth 89 on a shank 87 is engaged into a cavity 80 in a cursor 82 to stop the cursor 82 from being slid downwards along a guiding pillar 84. Simultaneously, a bump 85 on the shank 87 is engaged into a notch 86 on a holder 88 to hinder the shank 87 from being pivotally rotated relative to the holder 88 and prevent the tooth 89 from being disengaged out of the cavity 80 in order to keep all posts 83 of the conventional frame assembly 8 in a state of being stretched.

When the shank 87 is pushed toward the holder 88 to the extent that the bump 85 and tooth 89 are respectively disengaged out of the notch 86 and cavity 80, the cursor 82 can be slid downwards along the guiding pillar 84 so as to allow the posts 83 being pivotally rotated and thus make the conventional frame assembly 8 in a collapsed state.

However, if operations about stretching and collapsing the conventional frame assembly 8 are controlled only by one conventional locking device 81 and without a second safety device, then the conventional frame assembly 8 may be incidentally collapsed at an inappropriate time and thus hurt the child sitting therein when a user mistakenly operates the conventional locking device 81 or another child outside the stroller plays with the conventional locking device 81.

As shown in the Fig. 5 of DE 20 2005 001 871 U1, a wire is connected with a sleeve and a follower. The follower is connected with one end of a driving sheet. The driving sheet is pivotally connected with a strip at a pivoting point. When the sleeve is pulled upwards, the wire and the follower are cooperated and moved upwards. The driving sheet is rotated about the pivoting point by the follower. The driving plate is pushed downwards by the free end of the driving sheet so as to collapse the frame group.

DE 20 2005 001 871 U1 has the same problem as EP 1232927 A2 as DE 20 2005 001 871 U1 has no second safety device, either. Consequently, the sleeve may be mistakenly operated and directly cooperate the driving plate to collapse the frame group and thus hurt the child sitting therein.

As shown in the Figs. 5 and 6 of EP 1445167 A2, a bending link member and a connection member respectively include three sections to facilitate collapsing a baby carriage. However, the members do not incline downwards from each distal end to the centers thereof. Therefore, the members do not have the function to maintain the front legs and the rear legs in a stretching state. In other words, the members do not have the function of a safety device to prevent the baby carriage from being unexpectedly collapsed.

### Summary of the Invention

Accordingly, the present invention relates to a safety device and a frame assembly that are substantially intended to obviate one or more of the problems due to the limitations and disadvantages encountered in the prior art.

One object of the present invention is to provide a safety device and a frame assembly, wherein the safety device functions as a safety lock.

Another object of the present invention is to provide safety device and a frame assembly, wherein the safety device can prevent the frame assembly from being unexpectedly collapsed.

Additional features and advantages of the invention will be set forth in the description which follows, and in portion will be apparent from the description, or may be learned by practice of the invention. The objectives and advantages of the invention will be realized and attained by the structure as particularly set forth in the written description and claims as well as illustrated in the appended drawings.

To achieve these and other advantages and according to the purpose of the present invention, as embodied and broadly described, a safety device and a frame assembly as defined in claim 1 is provided.

The frame assembly comprises a first strut and a second strut. The safety device comprises: a first bar pivotally connected with the first strut; a second bar, two ends of which are pivotally connected respectively with the first bar and the second strut; and an actuating assembly, one end of which is adjacent to the first bar and another end of which is slidably connected with the frame assembly; wherein when the actuating assembly is operate, the first bar is cooperated by the actuating assembly and is pivotally rotated relative to the second bar so as to allow the frame assembly being collapsed.

The frame unit further includes a locking device and a plurality of rods, wherein two ends of each of the rods are pivotally connected respectively with the locking device and the struts. The another end of the actuating assembly may be slidably connected with the locking device.

Moreover, the locking device may include a base, wherein the actuating assembly includes a restrictor secured with the base as well as an active piece situated between the restrictor and the base, and wherein one end of the active piece is adjacent to the first bar.

It is another preferred feature that the actuating assembly further includes a ring provided with another end of the active piece.

Additionally, the another end of the actuating assembly is slidably connected with the first strut.

Furthermore, the actuating assembly includes an active piece slidably provided with the first strut, a passive piece slidably provided with the first strut as well as adjacent to the first bar, and a connecting piece connecting the active piece and the passive piece.

It is preferred that the frame unit further includes a locking device and a plurality of rods, and wherein two ends of each of the rods are pivotally connected respectively with the locking device and the struts.

It is preferred that the first bar slantwise extends downward from a point at which the first bar is pivotally connected with the first strut, and wherein the second bar slantwise extends downward from another point at which the second bar is pivotally connected with the second strut.

It is preferred that the safety device further includes a first elastic piece which is secured with the second strut and the second bar.

It is preferred that the first strut has a first slot and a second slot, wherein the active piece can be moved along the first slot and the passive piece can be moved along the second slot.

It is preferred that the safety device further includes a blocker and a second elastic piece both of which are received within the passive piece for urging the passive piece.

It is preferred that the passive piece has a bush portion, a first chamber and a second chamber both of which are defined by the bush portion, and a bottom which together with the bush portion define the second chamber, wherein the first strut is received within the first chamber and the blocker as well as the second elastic piece are received within the second chamber, and wherein the blocker is secured to the first strut and the second elastic piece abuts against the blocker as well as the bottom.

It is preferred that the passive piece has an arm portion for being used to push the first bar.

It is preferred that the arm portion is contacted with the first bar at a point of the first bar, and the point as well as the bush portion are situated at a side of the first bar.

It is preferred that the arm portion is contacted with the first bar at a point of the first bar, and the point and the bush portion are situated respectively at two opposite sides of the first bar.

It is preferred that the safety device further comprises a bridging piece which are pivotally connected with the first bar and the second bar.

It is preferred that the actuating assembly includes a pin which connects the first bar with the active piece.

It is preferred that the active piece has a groove and the pin is slidably received in the groove.

It is preferred that the active piece further has a body portion slidably received between the restrictor and the base, a head portion perpendicular to the body portion, and a tail portion parallel to the body portion; wherein the groove is formed in the tail portion.

Another aspect of the present invention relates to a frame assembly provided with a safety device. The frame assembly comprises a first strut, a second strut, a locking device, and a plurality of rods which are pivotally connected respectively with the locking device as well as the struts. The safety device is as described above. When the actuating assembly is operated and the locking device is unlocked, the bars as well as the rods can be pivotally rotated so that the first strut is moved toward the second strut and the frame assembly is collapsed.

It is preferred that the locking device includes a base as well as a slide, and the frame assembly further comprises a plurality of first rods pivotally connected respectively with the base as well as the struts and a plurality of second rods pivotally connected respectively with the slide as well as the struts.

It is preferred that the locking device further includes a pedal subassembly, and the frame assembly further comprises a plurality of third rods pivotally connected respectively with the pedal subassembly as well as the struts.

It is preferred that the locking device further includes a guiding pole along which the slide can be slid.

It is preferred that the locking device further includes a third elastic piece which is received within the guiding pole and is partially protruded outside the guiding pole so that the third elastic piece is engaged with the slide.

It is preferred that when the guiding pole is operated, the third elastic piece is cooperated so that the third elastic piece is disengaged with the slide to allow the slide being slid along the guiding pole.

It is to be understood that both the foregoing general description and the following detailed description are exemplary and explanatory and are intended to provide a further non-limiting explanation of the invention as claimed.

### Brief Description of the Drawings

The accompanying drawings, which are included to provide a further understanding of the invention and are incorporated in and constitute a portion of the specification, illustrate embodiments of the invention and together with the description serve to explain the principle of the invention. In the drawings:
Fig. 1 is an assembled perspective view illustrating a conventional locking device used in combination with a conventional frame assembly;
Fig. 2 is a front view illustrating a safety device according to the first preferred embodiment of the present invention, wherein the safety device is mounted with a base of a frame assembly which is in a stretched state;
Fig. 3 is a front view similar to the Fig. 2 but the frame assembly is in a collapsed state;
Fig. 4 is a perspective view illustrating a safety device according to the second preferred embodiment of the present invention, wherein the safety device is mounted with the first strut of the frame assembly which is in a stretched state;
Fig. 5 is a partially sectional view illustrating the safety device which is shown in Fig. 4;
Fig. 6 is front view illustrating an alternative example of the safety device which is shown in Fig. 4 and Fig. 5;
Fig. 7 is a perspective view similar to the Fig. 4 but the frame assembly is in a collapsed state;
Fig. 8 is a perspective view illustrating a safety device according to the third preferred embodiment of the present invention;
Fig. 9 is a front view illustrating a safety device according to the third preferred embodiment of the present invention, wherein the safety device is mounted with a base of a frame assembly which is in a stretched state;
Fig. 10 is sectional view taken from the Fig. 9 along the line X-X;
Fig. 11 is a front view illustrating a safety device according to the third preferred embodiment of the present invention, wherein the safety device is mounted with a base of a frame assembly which is in a collapsed state; and
Fig. 12 is sectional view taken from the Fig. 11 along the line XII-XII.

### Detailed Description of the Invention

The safety device used in combination with a frame assembly of the present invention can be installed with all kinds of strollers or umbrella push-chairs, and also can be used together with a locking device, which, for example, is disclosed in Chinese Patents No. ZL 2004 2 0001578.0, ZL 2004 2 0042488.6 and ZL 2004 2 0042482.9, and U.S. Patents No. US 4,765,645, US 5,226,658, US 5,845,925 and US 6,422,586 B1. Therefore, the frame assembly and locking device described hereinafter are for purpose of illustrating the safety device according to the present invention and not for limitation. Besides, the frame assembly and locking device were described in detail European Patent Application No. 05025378.0 and they are not the main characteristics of the present invention so that they will only be described briefly hereinafter.

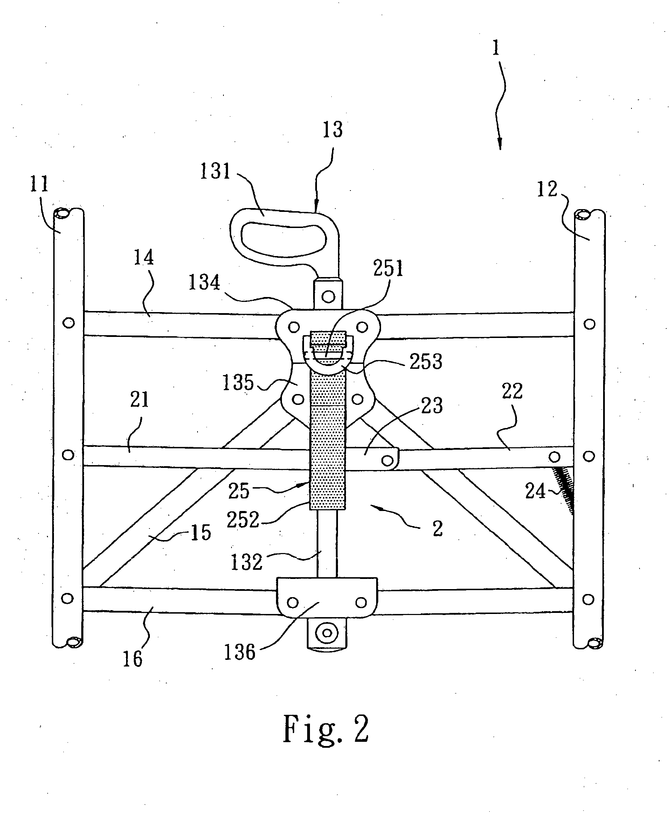

Only a part of a frame assembly 1 of a stroller is shown in Fig. 2. The frame assembly 1 at least comprises a first strut 11, a second strut 12 substantially parallel to the first strut 11, a locking device 13, two first rods 14, two second rods 15, and two third rods 16. One end of each first rod 14 is pivotally connected with either the first strut 11 or the second strut 12, and another end of each first rod 14 is pivotally connected with a base 134 included in the locking device 13. One end of each second rod 15 is pivotally connected with either the first strut 11 or the second strut 12, and another end of each second rod 15 is pivotally connected with a slide 135 included in the locking device 13. One end of each third rod 16 is pivotally connected with either the first strut 11 or the second strut 12, and another end of each third rod 16 is pivotally connected with a pedal subassembly 136 included in the locking device 13.

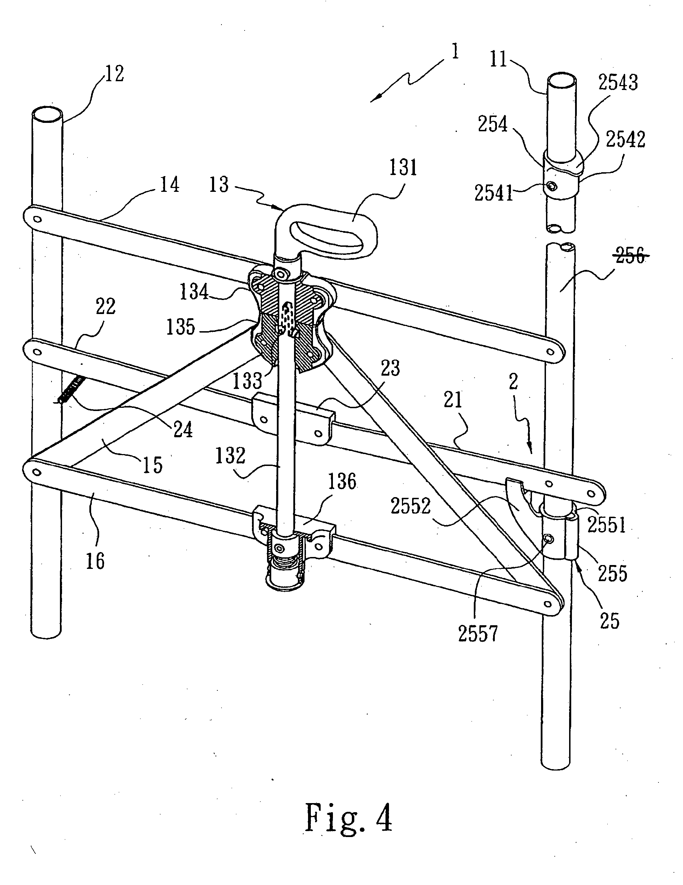

The locking device 13 includes a handle 131, a guiding pole 132 connected with one end of the handle 131, a V-shaped third elastic piece 133 accommodated in the guiding pole 132 but with two projections respectively protruding out of the guiding pole 132 (see Fig.4), the base 134 and the slide 135 both of which are circumferentially attached the guiding pole 132, and the pedal subassembly 136 which is amounted with another end of the guiding pole 132.

When the handle 131 is rotated, the guiding pole 132 together with the third elastic piece 133 are cooperated to make the projections be disengaged from the slide 135 and thus allow the slide 135 being slid downwards along the guiding pole 132.

### The first preferred embodiment of the safety device

As shown in Fig. 2, the safety device 2 used in combination with the frame assembly 1 according to the first preferred embodiment of the present invention comprises a first bar 21 one end of which is pivotally connected with the first strut 11, a second bar 22 one end of which is pivotally connected with the second strut 12, a bridging piece 23 which is pivotally connected with another ends of the first bar 21 and the second bar 22, a first elastic piece 24 two ends of which are respectively secured with the second strut 12 and the second bar 22, an actuating assembly 25 two ends of which are respectively connected with the first bar 21 and the base 134 of the locking device 13.

The actuating assembly 25 includes a U-shaped restrictor 251 two ends of which are secured with the base 134, an active piece 252 passing through a gap between the restrictor 251 and the base 134 and thus connecting with both restrictor 251 and the first bar 21, and a D-shaped ring 253 pivotally connected with the active piece 252 at the upper end thereof. The active piece 252 in this preferred embodiment is, for example, a ring-shaped strap. The first bar 21 is partially winded around or enclosed by lower end of the strap 252 and there exists a distance between the lower edge of the first bar 21 and the lower end of the strap 252. Therefore, the upper portion of the active piece 252 is slidably limited between the U-shaped restrictor 251 and the base 134.

The second bar 22 is pulled down by the first elastic piece 24 so that the second bar 22 is slightly inclined downwards from the pivotal point situated between the second bar 22 and the second strut 12 to another end of the second bar 22. By the connection of the bridging piece 23, the first bar 21 is also slightly inclined downwards from the pivotal point situated between the first bar 21 and the first strut 11 to another end of the first bar 21. In other words, both the first bar 21 and the second bar 22 are slightly inclined downwards relative to the horizon and would not pivotally rotate upwards automatically. Therefore, the frame assembly 1 can be firmly maintained in a stretched state as shown in Fig. 2 by the first bar 21 and the second bar 22 of the safety device 2.

In above embodiment, the first bar 21 and the second bar 22 are both situated between the first rods 14 and third rods 16. However, in an alternative example the first bar 21 and the second bar 22 may not be situated between the first rods 14 and third rods 16.

In a further example, the first bar 21 can be pivotally connected with the second bar 22 directly, and the bridging piece 23 is omitted. In addition, a tag (not shown) extending from the first bar 21 (or the second bar 22) can be abutted against the edge of the second bar 22 (or the first bar 21) to maintain the first bar 21 and the second bar 22 being slightly inclined downwards.

### Operation of the safety device of the first embodiment together with the locking device

When the frame assembly 1 is in a stretched state shown in Fig. 2, it cannot be collapsed only by user's rotating the handle 131 together with the guiding pole 132 and the third elastic piece 133 of the locking device 13 because the first strut 11 and second strut 12 are still separated by the inclined first bar 21 and second bar 22 which are not cooperated by the actuating assembly 25 or the active piece 252. Similarly, if only the active piece 252 of the safety device 2 is pulled upwards by the user, the frame assembly 1 still cannot be collapsed by pulling the active piece 252 or the first bar 21 upwards because the locking device 13 is still not unlocked.

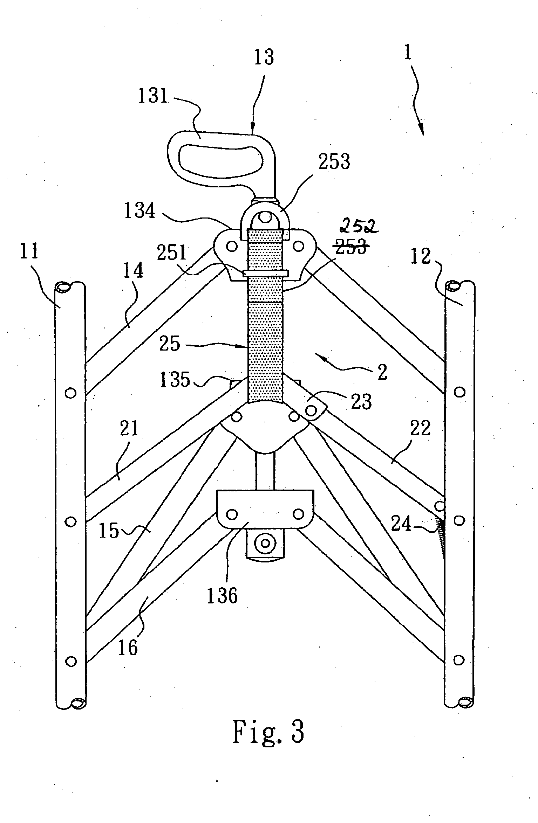

Only when the handle 131 and the active piece 252 are sequentially or simultaneously operated, then the frame assembly 1 can be collapsed as shown in Fig. 3.

The sequential operation means that the handle 131 of the locking device 13 is firstly rotated and slightly pulled upwards by one hand to the extent that the third elastic piece 133 is disengaged from the slide 135. Then, the active piece 252 is pulled upwards by the same hand to pivotally rotating the first bar 21 and second bar 22 upwards. Since both the locking device 13 and the safety device 2 are released, the frame assembly 1 can be completely collapsed by user's further pulling upwards the handle 131 to make the slide 135 slide downwards along the guiding pole 132.

The simultaneous operation means that when the handle 131 of the locking device 13 is rotated by one hand and simultaneously the ring 253 on the active piece 252 of the safety device 2 is pulled upwards by another hand, releasing the locking device 13 and pivotally rotating the first bar 21 and second bar 22 upwards can occur at the same time so as to collapse the frame assembly 1 as shown in Fig.3.

Hence, when either the locking device 13 or the safety device 2 is mistakenly operated by a user or is played with by a child, the frame assembly 1 would not be collapsed accidentally so as to prevent the baby in the stroller from being hurt. From above description, we know that the safety device 2 of the present invention has the function of a safety lock for the locking device 13.

### Safety device of the second preferred embodiment

As shown in Fig. 4, the safety device 2 of the second preferred embodiment also comprises the first bar 21, the second bar 22, the bridging piece 23 and the first elastic piece 24 all of which are similar to those in the first preferred embodiment. However, the first bar 21 and the second bar 22 may be different in length as shown in Fig. 2 of the first preferred embodiment, or may be the same in length as shown in Fig. 4 of the second preferred embodiment.

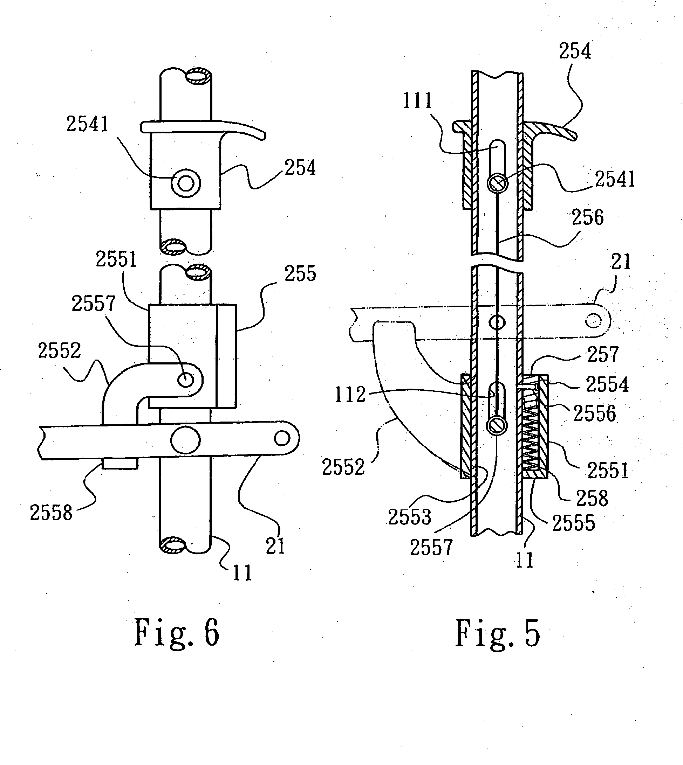

As shown in Figs. 4 and 5, the main differences between the safety devices 2 of the first and the second preferred embodiments exist in the actuating assembly 25. The actuating assembly 25 of the second preferred embodiment includes no restrictor 251 and ring 253, but alternatively includes an active piece 254 slidably enclosed around the first strut 11 at upper end thereof, a passive piece 255 slidably enclosed around the first strut 11 at lower end thereof, a flexible connecting piece 256 connecting both the active piece 254 and the passive piece 255, and a blocker 257 and a second elastic piece 258 both of which are received within the passive piece 255.

The active piece 254 has an annular wall 2542 and a tongue 2543 extending away from the wall 2542 outwards.

The passive piece 255 has a bush portion 2551, an arm portion 2552 extending away from the bush portion 2551 outwards, a larger first chamber 2553 and a smaller second chamber 2554 both of which are defined by the bush portion 2551 and in spatial communication with each other, and a bottom 2555 situated under the second chamber 2554.

The first strut 11 of the frame assembly 1 is passed through the first chamber 2553 and is received within the passive piece 255. The blocker 257 of the actuating assembly 25 is received within the second chamber 2554 and is secured to the first strut 11 by a screw 2556. The second elastic piece 258 is arranged in the second chamber 2554 in the way that two opposite ends of the second elastic piece 258 are respectively abutted against the blocker 257 and the bottom 2555. The upper end of the arm portion 2552 is close to or contacts with the first bar 21.

The first strut 11 has a first slot 111 and a second slot 112. A first fastener 2541, such as a rivet, is passed through the wall 2542 of the active piece 254 and the first slot 111 of the first strut 11 so that the active piece 254 can slide along the first slot 111 with the active piece 254 at the upper portion of the first strut 11. A second fastener 2557, such as a rivet, is passed through the bush portion 2551 of the passive piece 255 and the second slot 112 of the first strut 11 so that the passive piece 255 can slide along the second slot 112 with the passive piece 255 at lower portion of the first strut 11 and below a place where the first bar 21 is pivotally connected with the first strut 11. In this case, the free end of the arm portion 2552 is close to or substantially contacted with the lower edge of the first bar 21. Then, two opposite ends of the connecting piece 256, such as a flexible wire, are respectively secured with the first fastened 2541 and the second fastener 2557. Accordingly, when the active piece 254 is pulled upwards by a user to make the first fastener 2541 be slid upwards in the first slot 111, the passive piece 255 and the second fastener 2557 are also slid upwards along the second slot 112 by means of cooperation from the connecting piece 256 so as to cause the arm portion 2552 of the passive piece 255 pushing the first bar 21 upwards.

In an alternative example, the connecting piece 256 can be directly secured to the active piece 254 and the passive piece 255 rather than the first fastener 2541 and the second fastener 2557.

In Figs. 4 and 5, the bush portion 2551 of the passive piece 255 as well as the contacting point formed by the arm 2552 and the first bar 21 are both situated at the same side of the first bar 21, i.e., underside of the first bar 21. What is illustrated in Fig. 6 is another example of the passive piece 255 which further has a finger 2558 perpendicularly extending away from the distal end of the arm portion 2552. The finger 2558 is situated under the lower edge of the first bar 21. In contrast, the bush portion 2551 is mounted with the first strut 11 above the first bar 21. Therefore, the bush portion 2551 as well as the contacting point formed by the arm 2552 and the first bar 21 are respectively situated at the different sides of the first bar 21, i.e., two opposite sides of the first bar 21.

### Operation of the safety device of the second embodiment together with the locking device

When the frame assembly 1 is in a stretched state shown in Fig. 4, it cannot be collapsed only by user's rotating the handle 131 together with the guiding pole 132 and the third elastic piece 133 of the locking device 13 because the first strut 11 and second strut 12 are still separated by the inclined first bar 21 and second bar 22 which are not cooperated by the actuating assembly 25 or the active piece 254. Similarly, if only the active piece 254 of the safety device 2 is pulled upwards by the user, the frame assembly 1 still cannot be collapsed by pulling the active piece 254, the passive piece 255 or the first bar 21 upwards because the locking device 13 is still not unlocked.

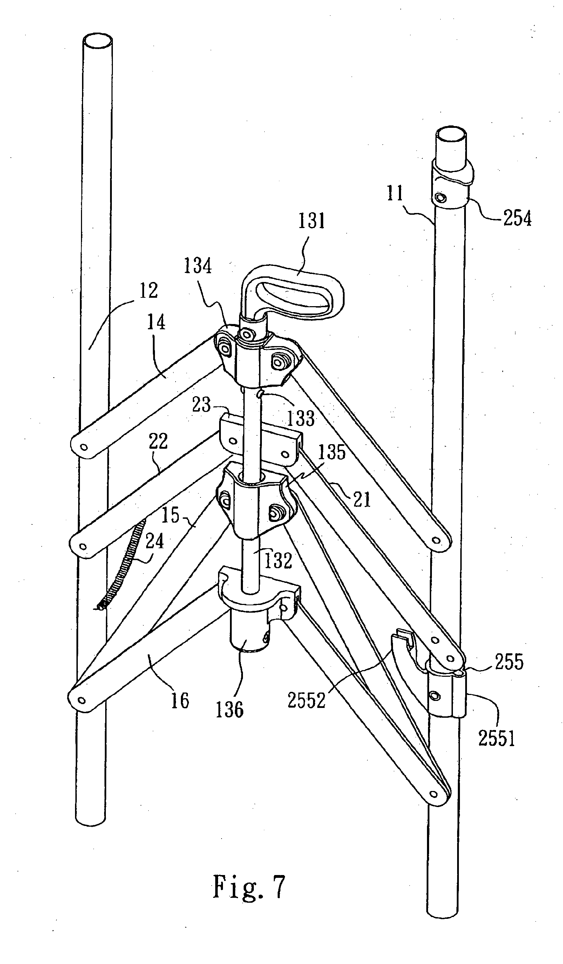

Only when the handle 131 and the active piece 254 are sequentially or simultaneously operated, then the frame assembly 1 can be collapsed as shown in Fig. 7.

The sequential operation means that the handle 131 of the locking device 13 is firstly rotated and slightly pulled upwards by one hand to the extent that the third elastic piece 133 is disengaged from the slide 135. Then, the active piece 254 is pulled upwards by the same hand and the passive piece 255 pivotally rotates the first bar 21 and second bar 22 upwards. Since both the locking device 13 and the safety device 2 are released, the frame assembly 1 can be completely collapsed by user's further pulling upwards the handle 131 to make the slide 135 slide downwards along the guiding pole 132.

The simultaneous operation means that when the handle 131 of the locking device 13 is rotated by one hand and simultaneously the active piece 254 of the safety device 2 is pulled upwards by another hand, releasing the locking device 13 and pulling the passive piece 255 upwards by the connecting piece 256 can occur at the same time so as to pivotally rotate the first bar 21 and the second bar 22 upwards and thus collapse the frame assembly 1 as shown in Fig.7.

Hence, when either the locking device 13 or the safety device 2 is mistakenly operated by a user or is played with by a child, the frame assembly 1 would not be collapsed incidentally so as to prevent the baby in the stroller from being hurt. From above description, we know that the safety device 2 of the present invention has the function of a safety lock for the locking device 13.

When the active piece 254 is no longer operated, the passive piece 255, connecting piece 256 and active piece 254 are moved downwards again by restoration force of the second elastic piece 258.

### The third preferred embodiment of the safe device

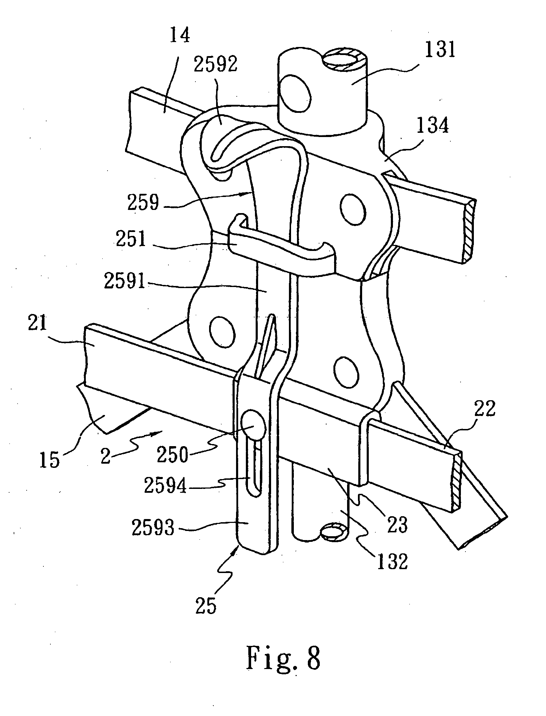

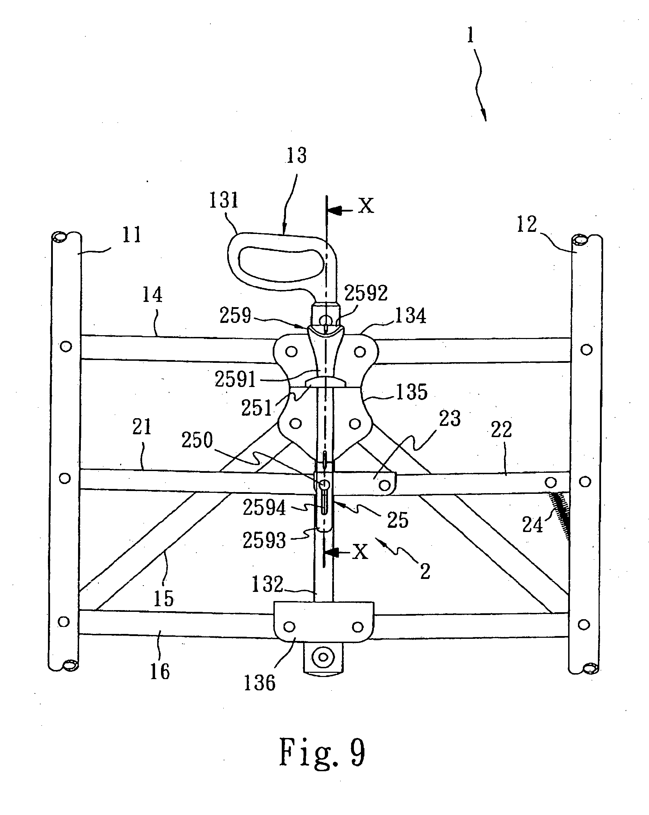

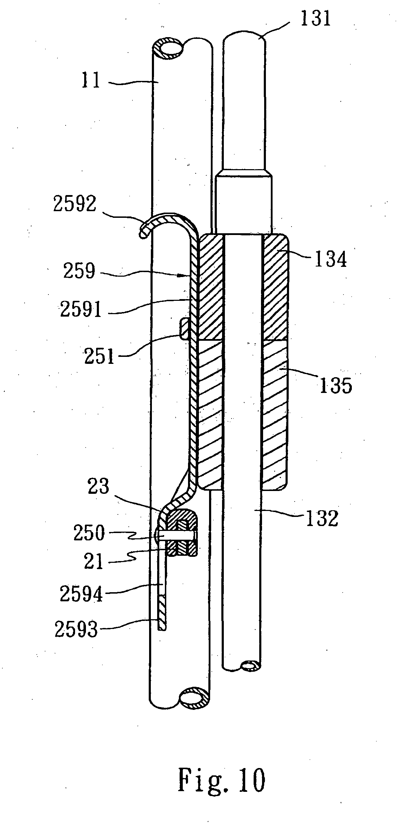

As shown in Figs. 8, 9 and 10, the safety device 2 used in combination with the frame assembly 1 according to the third preferred embodiment of the present invention is similar to the first preferred embodiment except that the active piece 259 is made of, for example, plastic material and has a body portion 2591, a head portion 2592 perpendicularly extending away from the body portion 2591, a tail portion 2593 substantially parallel extending away from the body portion 2591 but situated at different planes, and a groove 2594 formed in the tail portion 2593. Also, the actuating assembly 25 in the safety device 2 of the third preferred embodiment further includes a pin 250, which protruded out of the bridging piece 23 and the first bar 21, as the passive piece.

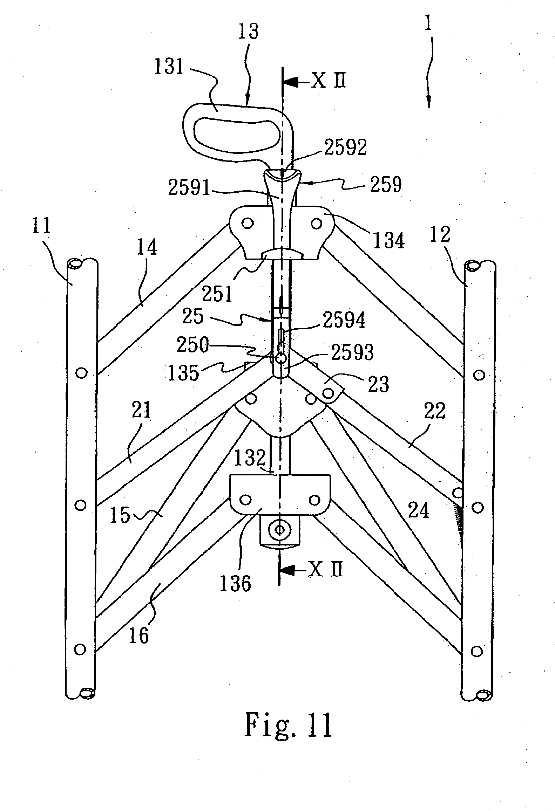

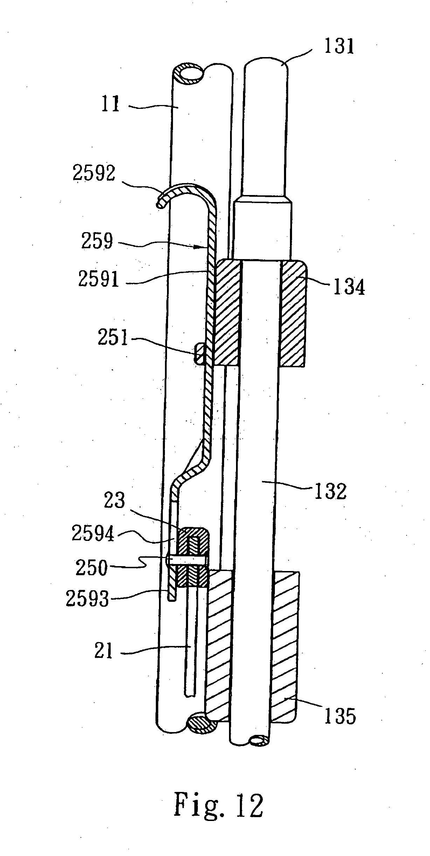

The body portion 2591 of the active piece 259 is slidably received in the gap defined by the restrictor 251 and the base 134. Therefore, when the user pulls upwards the head portion 2592 of the active piece 259, the tail portion 2593 is firstly slid by the guidance of the pin 250 in the groove 2594, and then the tail portion 2593 cooperates upwards the pin 250 together with bridging piece 23 and the bars 21, 22 to release the safety device 2 as shown in Figs. 11 and 12.

This invention has been disclosed in terms of specific embodiments. It will be apparent that many modifications can be made to the disclosed structures without departing from the invention. Therefore, it is the intent of the appended claims to cover all such variations and modifications that are within the breadth and scope of this invention as defined by the claims.

## Claims

1. A safety device and a frame assembly, the frame assembly comprising a first strut (11), a second strut (12), and a plurality of rods (14-16), first ends of each of the rods being pivotally connected with the struts (11, 12), the safety device comprising:
a first bar (21) pivotally connected with the first strut (11);
a second bar (22), two ends of which are pivotally connected respectively with the first bar (21) and the second strut (12); and
an actuating assembly (25), one end of which is adjacent to the first bar (21) and another end of which is slidably connected with the frame assembly (1);
wherein the first bar (21) is cooperated by the actuating assembly (25) and is pivotally rotated relative to the second bar (22) when the actuating assembly (25) is operated, **characterised in that** the frame assembly further comprises a locking devixe (13), second ends of each of the rods (14-16) being pivotally connected with the locking device (13), the fame assembly (1) being able to be collapsed only when the locking device (13) and the safety device (2) are sequentially or simultaneously operated.

2. The safety device and the frame assembly as claimed in claim 1, wherein the another end of the actuating assembly (25) is slidably connected with the locking device (13).

3. The safety device and the frame assembly as claimed in claim 2, wherein the locking device (13) includes a base (134), wherein the actuating assembly (25) includes a restrictor (251) secured with the base (134) as well as an active piece (252) situated between the restrictor (251) and the base (134), and wherein one end of the active piece (252) is adjacent to the first bar (21).

4. The safety device and the frame assembly as claimed in claim 3, wherein the actuating assembly (25) further includes a ring (253) provided with another end of the active piece (252).

5. The safety device and the frame assembly as claimed in claim 1, wherein the another end of the actuating assembly (25) is slidably connected with the first strut (11).

6. The safety device and the frame assembly as claimed in claim 5, wherein the actuating assembly (25) includes an active piece (254) slidably provided with the first strut (11), a passive piece (255) slidably provided with the first strut (11) as well as adjacent to the first bar (21), and a connecting piece (256) connecting the active piece (254) and the passive piece (255).

7. The safety device and the frame assembly as claimed in claim 1, 3 or 5, wherein the first bar (21) slantwise extends downward from a point at which the first bar (21) is pivotally connected with the first strut (11), and wherein the second bar (22) slantwise extends downward from another point at which the second bar (22) is pivotally connected with the second strut (12).

8. The safety device and the frame assembly as claimed in claim 7, wherein the safety device further includes a first elastic piece (24) which is secured with the second strut (12) and the second bar (22) to pull down the second bar (22).

9. The safety device and the frame assembly as claimed in claim 6, wherein the first strut (11) has a first slot (111) and a second slot (112), wherein the active piece (254) can be moved along the first slot (111) and the passive piece (255) can be moved along the second slot (112).

10. The safety device and the frame assembly as claimed in claim 6 or 9, wherein the safety device further includes a blocker (257) and a second elastic piece (258) both of which are received within the passive piece (255) for urging the passive piece (255).

11. The safety device and the frame assembly as claimed in claim 10, wherein the passive piece (255) has a bush portion (2551), a first chamber (2553) and a second chamber (2554) both of which are defined by the bush portion (255), and a bottom (2555) which together with the bush portion (255) define the second chamber (2554), wherein the first strut (11) is received within the first chamber (2553) and the blocker (257) as well as the second elastic piece (258) are received within the second chamber (2554), and wherein the blocker (257) is secured to the first strut (11) and the second elastic piece (258) abuts against the blocker (257) as well as the bottom (2555).

12. The safety device and the frame assembly as claimed in claim 6, wherein the passive piece (255) has an arm portion (2552) for being used to push the first bar (21).

13. The safety device and the frame assembly as claimed in claim 12, wherein the arm portion (2552) is contacted with the first bar (21) at a point of the first bar (21), and the point as well as the bush portion (2551) are situated at a side of the first bar (21).

14. The safety device and the frame assembly as claimed in claim 12, wherein the arm portion (2552) is contacted with the first bar (21) at a point of the first bar (21), and the point and the bush portion (2551) are situated respectively at two opposite sides of the first bar (21).

15. The safety device and the frame assembly as claimed in claim 7, wherein the safety device further comprises a bridging piece (23) which are pivotally connected with the first bar (21) and the second bar (22).

16. The safety device and the frame assembly as claimed in claim 3, wherein the actuating assembly (25) includes a pin (250) which connects the first bar (21) with the active piece (259).

17. The safety device and the frame assembly as claimed in claim 16, wherein the active piece (259) has a groove (2594) and the pin (250) is slidably received in the groove (2594).

18. The safety device and the frame assembly as claimed in claim 17, wherein the active piece (259) further has a body portion (2591) slidably received between the restrictor (251) and the base (134), a head portion (2592) perpendicular to the body portion (2591), and a tail portion (2593) parallel to the body portion (2591); wherein the groove (2594) is formed in the tail portion (2593).

19. A frame assembly provided with a safety device (2), the frame assembly comprising a first strut (11), a second strut (12), a locking device (13), and a plurality of rods (14-16) which are pivotally connected respectively with the locking device (13) as well as the struts (11, 12), **characterized in that**
the safety device (2) is as claimed in any one of claims 1 to 18, wherein when the actuating assembly (25) is operated and the locking device (13) is unlocked, the bars (21, 22) as well as the rods (14-16) can be pivotally rotated so that the first strut (11) is moved toward the second strut (12) and the frame assembly is collapsed.

20. The frame assembly provided with a safety device as claimed in claim 19, wherein the locking device (13) includes a base (134) as well as a slide (135), and the frame assembly further comprises a plurality of first rods (14-16) pivotally connected respectively with the base (134) as well as the struts (11, 12) and a plurality of second rods (15) pivotally connected respectively with the slide (135) as well as the struts (11, 12).

21. The frame assembly provided with a safety device as claimed in claim 20, wherein the locking device (13) further includes a pedal subassembly (136), and the frame assembly further comprises a plurality of third rods (16) pivotally connected respectively with the pedal subassembly (136) as well as the struts (11, 12).

22. The frame assembly provided with a safety device as claimed in claim 20, wherein the locking device (13) further includes a guiding pole (132) along which the slide (135) can be slid.

23. The frame assembly provided with a safety device as claimed in claim 22, wherein the locking device (13) further includes a third elastic piece (133) which is received within the guiding pole (132) and is partially protruded outside the guiding pole (132) so that the third elastic piece (133) is engaged with the slide (135).

24. The frame assembly provided with a safety device as claimed in claim 23, wherein when the guiding pole (132) is operated, the third elastic piece (133) is cooperated so that the third elastic piece (133) is disengaged with the slide (135) to allow the slide (135) being slid along the guiding pole (132).

## Patentansprüche

1. Sicherheitsvorrichtung und Rahmenanordnung, wobei die Rahmenanordnung eine erste Strebe (11), eine zweite Strebe (12) und mehrere Stangen (14-16) umfasst, wobei erste Enden von jeder der Stangen schwenkbar mit den Streben (11,12) verbunden sind, wobei die Sicherheitsvorrichtung umfasst:
einen ersten Stab (21), welcher schwenkbar mit der ersten Strebe (11) verbunden ist;
einen zweiten Stab (22), wobei zwei Enden davon schwenkbar mit dem ersten Stab (21) bzw. der zweiten Strebe (12) verbunden sind, und
eine Betätigungsanordnung (25), wobei sich ein Ende davon benachbart zu dem ersten Stab (21) befindet und ein anderes Ende davon verschiebbar mit der Rahmenanordnung (1) verbunden ist;
wobei der erste Stab (21) zusammen mit der Betätigungsanordnung (25) betätigt wird und relativ zu dem zweiten Stab (22) schwenkbar gedreht wird, wenn die Betätigungsanordnung (25) betätigt wird, **dadurch gekennzeichnet, dass** die Rahmenanordnung ferner eine Verriegelungsvorrichtung (13) umfasst, wobei zweite Enden von jeder der Stangen (14-16) schwenkbar mit der Verriegelungsvorrichtung (13) verbunden sind, wobei die Rahmenanordnung (1) in der Lage ist, nur zusammengelegt zu werden, wenn die Verriegelungsvorrichtung (13) und die Sicherheitsvorrichtung (2) aufeinanderfolgend oder gleichzeitig betätigt werden.

2. Sicherheitsvorrichtung und Rahmenanordnung nach Anspruch 1, wobei das andere Ende der Betätigungsanordnung (25) verschiebbar mit der Verriegelungsvorrichtung (13) verbunden ist.

3. Sicherheitsvorrichtung und Rahmenanordnung nach Anspruch 2, wobei die Verriegelungsvorrichtung (13) eine Basis (134) aufweist, wobei die Betätigungsvorrichtung (25) einen Begrenzer (251) aufweist, welcher an der Basis (134) sowie einem aktiven Teil (252), welches zwischen dem Begrenzer (251) und der Basis (134) angeordnet ist, befestigt ist, und wobei sich ein Ende des aktiven Teils (252) benachbart zu dem ersten Stab (21) befindet.

4. Sicherheitsvorrichtung und Rahmenanordnung nach Anspruch 3, wobei die Betätigungsanordnung (25) ferner einen Ring (253) aufweist, welcher mit einem anderen Ende des aktiven Teils (252)versehen ist.

5. Sicherheitsvorrichtung und Rahmenanordnung nach Anspruch 1, wobei das andere Ende der Betätigungsanordnung (25) verschiebbar mit der ersten Strebe (11) verbunden ist.

6. Sicherheitsvorrichtung und Rahmenanordnung nach Anspruch 5, wobei die Betätigungsanordnung (25) ein aktives Teil (254), welches verschiebbar bei der ersten Strebe (11) vorgesehen ist, ein passives Teil (255), welches verschiebbar bei der ersten Strebe (11) sowie benachbart zu dem ersten Stab (21) vorgesehen ist, und ein Verbindungsteil (256), welches das aktive Teil (254) und das passive Teil (255) verbindet, aufweist.

7. Sicherheitsvorrichtung und Rahmenanordnung nach Anspruch 1, 3 oder 5, wobei sich der erste Stab (21) schräg weisend von einem Punkt, an welchem der erste Stab (21) schwenkbar mit der ersten Strebe (11) verbunden ist, nach unten erstreckt, und wobei sich der zweite Stab (22) schräg weisend von einem anderen Punkt, an welchem der zweite Stab (22) schwenkbar mit der zweiten Strebe (12) verbunden ist, nach unten erstreckt.

8. Sicherheitsvorrichtung und Rahmenanordnung nach Anspruch 7, wobei die Sicherheitsvorrichtung ferner ein erstes elastisches Teil (24) aufweist, welches mit der zweiten Strebe (12) und dem zweiten Stab (22) verbunden ist, um den zweiten Stab (22) nach unten zu ziehen.

9. Sicherheitsvorrichtung und Rahmenanordnung nach Anspruch 6, wobei die erste Strebe (11) einen ersten Schlitz (111) und einen zweiten Schlitz (112) aufweist, wobei das aktive Teil (254) entlang dem ersten Schlitz (111) bewegt werden kann und das passive Teil (255) entlang dem zweiten Schlitz (112) bewegt werden kann.

10. Sicherheitsvorrichtung und Rahmenanordnung nach Anspruch 6 oder 9, wobei die Sicherheitsvorrichtung ferner einen Blocker (257) und ein zweites elastisches Teil (258) aufweist, welche beide innerhalb des passiven Teils (255) zum Drängen des passiven Teils (255) enthalten sind.

11. Sicherheitsvorrichtung und Rahmenanordnung nach Anspruch 10, wobei das passive Teil (255) einen Buchsenabschnitt (2551), eine erste Kammer (2553) und eine zweite Kammer (2554), welche beide durch den Buchsenabschnitt (255) definiert werden, und einen Boden (2555), welcher die zweite Kammer (25554) zusammen mit dem Buchsenabschnitt (255) definiert, aufweist, wobei die erste Strebe (11) in der ersten Kammer (2553) aufgenommen ist und der Blocker (257) sowie das zweite elastische Teil (258) in der zweiten Kammer (2554) aufgenommen sind, und wobei der Blocker (257) an der ersten Strebe (11) befestigt ist und das zweite elastische Teil (258) gegen den Blocker (257) sowie den Boden (2555) stößt.

12. Sicherheitsvorrichtung und Rahmenanordnung nach Anspruch 6, wobei das passive Teil (255) einen Armabschnitt (2552) aufweist, welcher verwendet wird, um den ersten Stab (21) zu schieben.

13. Sicherheitsvorrichtung und Rahmenanordnung nach Anspruch 12, wobei der Armabschnitt (2552) an einem Punkt des ersten Stabs (21) in Kontakt mit dem ersten Stab (21) ist, und wobei der Punkt sowie der Buchsenabschnitt (2551) an einer Seite des ersten Stabs (21) angeordnet sind.

14. Sicherheitsvorrichtung und Rahmenanordnung nach Anspruch 12, wobei der Armabschnitt (2552) an einem Punkt des ersten Stabs (21) in Kontakt mit dem ersten Stab (21) ist, und wobei der Punkt bzw. der Buchsenabschnitt (2551) an zwei gegenüberliegenden Seiten des ersten Stabs (21) angeordnet sind.

15. Sicherheitsvorrichtung und Rahmenanordnung nach Anspruch 7, wobei die Sicherheitsvorrichtung ferner ein Brückenteil (23) umfasst, welches schwenkbar mit dem ersten Stab (21) und dem zweiten Stab (22) verbunden ist.

16. Sicherheitsvorrichtung und Rahmenanordnung nach Anspruch 3, wobei die Betätigungsanordnung (25) einen Stift (250) aufweist, welcher den ersten Stab (21) mit dem aktiven Teil (259) verbindet.

17. Sicherheitsvorrichtung und Rahmenanordnung nach Anspruch 16, wobei das aktive Teil (259) eine Nut (2594) aufweist und der Stift (250) verschiebbar in der Nut (2594) aufgenommen ist.

18. Sicherheitsvorrichtung und Rahmenanordnung nach Anspruch 17, wobei das aktive Teil (259) ferner einen Körperabschnitt (2591), welcher verschiebbar zwischen dem Begrenzer (251) und der Basis (134) aufgenommen ist, einen Kopfabschnitt (2592) senkrecht zu dem Körperabschnitt (2591) und einen Endabschnitt (2593) parallel zu dem Körperabschnitt (2591) aufweist; wobei die Nut (2594) in den Endabschnitt (2593) ausgebildet ist.

19. Rahmenanordnung, welche mit einer Sicherheitsvorrichtung (2) versehen ist, wobei die Rahmenanordnung eine erste Strebe (11), eine zweite Strebe (12), eine Verriegelungsvorrichtung (13) und mehrere Stangen (14-16), welche jeweils schwenkbar mit der Verriegelungsvorrichtung (13) sowie den Streben (11, 12) verbunden sind, umfasst, **dadurch gekennzeichnet, dass**
die Sicherheitsvorrichtung (2) so ausgebildet ist, wie es in einem der Ansprüche 1-18 beansprucht wird, wobei, wenn die Betätigungsanordnung (25) betätigt wird und die Verriegelungsvorrichtung (13) entriegelt ist, die Stäbe (21, 22), sowie die Stangen (14-16) derart schwenkbar gedreht werden können, dass die erste Strebe (11) in Richtung der zweiten Strebe (12) bewegt wird, und die Rahmenanordnung zusammengelegt wird.

20. Rahmenanordnung, welche mit einer Sicherheitsvorrichtung versehen ist, nach Anspruch 19, wobei die Verriegelungsvorrichtung (13) eine Basis (134) sowie ein Gleitstück (135) aufweist, und wobei die Rahmenanordnung ferner mehrere erste Stangen (14-16), welche jeweils schwenkbar mit der Basis (134) sowie den Streben (11, 12) verbunden sind, und mehrere zweite Stangen (15), welche jeweils mit dem Gleitstück (35) sowie den Streben (11, 12) schwenkbar verbunden sind, umfasst.

21. Rahmenanordnung, welche mit einer Sicherheitsvorrichtung versehen ist, nach Anspruch 20, wobei die Verriegelungsvorrichtung (13) ferner eine Pedalteilanordnung (136) aufweist, und wobei die Rahmenanordnung ferner mehrere dritte Stangen (16) umfasst, welche jeweils mit der Pedalteilanordnung (136) sowie den Streben (11,12) schwenkbar verbunden sind.

22. Rahmenanordnung, welche mit einer Sicherheitsvorrichtung versehen ist, nach Anspruch 20, wobei die Verriegelungsvorrichtung (13) ferner eine Führungsstange (132) aufweist, entlang welcher das Gleitstück (135) gleiten kann.

23. Rahmenanordnung, welche mit einer Sicherheitsvorrichtung versehen ist, nach Anspruch 22, wobei die Verriegelungsvorrichtung (13) ferner ein drittes elastisches Teil (133) aufweist, welches in der Führungsstange (132) aufgenommen ist und teilweise außerhalb der Führungsstange (132) derart hervorragt, dass sich das dritte elastische Teil (133) mit dem Gleitstück (135) in Eingriff befindet.

24. Rahmenanordnung, welche mit einer Sicherheitsvorrichtung versehen ist, nach Anspruch 23, wobei, wenn die Führungsstange (132) betätigt wird, das dritte elastische Teil (133) derart zusammen betätigt wird, dass das dritte elastische Teil (133) von dem Gleitstück (135) entkoppelt wird, um dem Gleitstück (135) zu ermöglichen, dass es entlang der Führungsstange (132) geschoben wird.

## Revendications

1. Dispositif de sécurité et ensemble armature, l'ensemble armature comprenant un premier étai (11), un second étai (12), et une pluralité de tiges (14-16), des premières extrémités de chacune des tiges étant raccordées de façon pivotante aux étais (11, 12), le dispositif de sécurité comprenant :
une première barre (21) raccordée de façon pivotante au premier étai (11) ;
une seconde barre (22), dont deux extrémités sont raccordées de façon pivotante, respectivement, à la première barre (21) et au second étai (12) ; et
un ensemble actionneur (25), dont une extrémité est adjacente à la première barre (21) et dont une autre extrémité est raccordée de façon coulissante à l'ensemble armature (1) ;
dans lesquels la première barre (21) coopère avec l'ensemble actionneur (25) et est tournée de façon pivotante par rapport à la seconde barre (22) lorsque l'ensemble actionneur (25) est actionné, **caractérisés en ce que** l'ensemble armature comprend en outre un dispositif de verrouillage (13), des secondes extrémités de chacune des tiges (14-16) étant raccordées de façon pivotante au dispositif de verrouillage (13), l'ensemble armature (1) étant capable d'être aplati seulement lorsque le dispositif de verrouillage (13) et le dispositif de sécurité (2) sont actionnés séquentiellement ou simultanément.

2. Dispositif de sécurité et ensemble armature selon la revendication 1, dans lesquels l'autre extrémité de l'ensemble actionneur (25) est raccordée de façon coulissante au dispositif de verrouillage (13).

3. Dispositif de sécurité et ensemble armature selon la revendication 2, dans lesquels le dispositif de verrouillage (13) comprend une base (134), dans lesquels l'ensemble actionneur (25) comprend un limiteur (251) fixé à la base (134) ainsi qu'une pièce active (252) située entre le limiteur (251) et la base (134), et dans lesquels une extrémité de la pièce active (252) est adjacente à la première barre (21).

4. Dispositif de sécurité et ensemble armature selon la revendication 3, dans lesquels l'ensemble actionneur (25) comprend en outre une bague (253) pourvue d'une autre extrémité de la pièce active (252).

5. Dispositif de sécurité et ensemble armature selon la revendication 1, dans lesquels l'autre extrémité de l'ensemble actionneur (25) est raccordée de façon coulissante au premier étai (11).

6. Dispositif de sécurité et ensemble armature selon la revendication 5, dans lesquels l'ensemble actionneur (25) comprend une pièce active (254) pourvue de façon coulissante du premier étai (11), une pièce passive (255) pourvue de façon coulissante du premier étai (11) ainsi qu'adjacente à la première barre (21), et une pièce de raccordement (256) raccordant la pièce active (254) et la pièce passive (255).

7. Dispositif de sécurité et ensemble armature selon la revendication 1, 3 ou 5, dans lesquels la première barre (21) s'étend de façon inclinée vers le bas à partir d'un point auquel la première barre (21) est raccordée de façon pivotante au premier étai (11), et dans lesquels la seconde barre s'étend de façon inclinée vers le bas à partir d'un autre point auquel la seconde barre (22) est raccordée de façon pivotante au second étai (12).

8. Dispositif de sécurité et ensemble armature selon la revendication 7, dans lesquels le dispositif de sécurité comprend en outre une première pièce élastique (24) qui est fixée au second étai (12) et à la seconde barre (22) pour tirer vers le bas la seconde barre (22).

9. Dispositif de sécurité et ensemble armature selon la revendication 6, dans lesquels le premier étai (11) comporte une première fente (111) et une seconde fente (112), dans lesquels la pièce active (254) peut être déplacée le long de la première fente (111) et la pièce passive (255) peut être déplacée le long de la seconde fente (112).

10. Dispositif de sécurité et ensemble armature selon la revendication 6 ou 9, dans lesquels le dispositif de sécurité comprend en outre un bloqueur (257) et une deuxième pièce élastique (258) qui sont tous les deux reçus à l'intérieur de la pièce passive (255) pour solliciter la pièce passive (255).

11. Dispositif de sécurité et ensemble armature selon la revendication 10, dans lesquels la pièce passive (255) comporte une partie douille (2551), une première chambre (2553) et une seconde chambre (2554) qui sont toutes les deux définies par la partie douille (255), et un fond (2555) qui, conjointement avec la partie douille (255), définit la seconde chambre (2554), dans lesquels le premier étai (11) est reçu à l'intérieur de la première chambre (2553) et le bloqueur (257) ainsi que la deuxième pièce élastique (258) sont reçus à l'intérieur de la seconde chambre (2554), et dans lesquels le bloqueur (257) est fixé au premier étai (11) et la deuxième pièce élastique (258) prend appui contre le bloqueur (257) ainsi que le fond (2555).

12. Dispositif de sécurité et ensemble armature selon la revendication 6, dans lesquels la pièce passive (255) comporte une partie bras (2552) destinée à être utilisée pour pousser la première barre (21).

13. Dispositif de sécurité et ensemble armature selon la revendication 12, dans lesquels la partie bras (2552) est mise en contact avec la première barre (21) à un point de la première barre (21), et le point ainsi que la partie douille (2551) sont situés sur un côté de la première barre (21).

14. Dispositif de sécurité et ensemble armature selon la revendication 12, dans lesquels la partie bras (2552) est mise en contact avec la première barre (21) à un point de la première barre (21), et le point et la partie douille (2551) sont situés respectivement sur deux côtés opposés de la première barre (21).

15. Dispositif de sécurité et ensemble armature selon la revendication 7, dans lesquels le dispositif de sécurité comprend en outre une pièce de liaison (23) qui est raccordée de façon pivotante à la première barre (21) et la seconde barre (22).

16. Dispositif de sécurité et ensemble armature selon la revendication 3, dans lesquels l'ensemble actionneur (25) comprend une goupille (250) qui raccorde la première barre (21) à la pièce active (259).

17. Dispositif de sécurité et ensemble armature selon la revendication 16, dans lesquels la pièce active (259) comporte une rainure (2594) et la goupille (250) est reçue de façon coulissante dans la rainure (2594).

18. Dispositif de sécurité et ensemble armature selon la revendication 17, dans lesquels la pièce active (259) comporte en outre une partie corps (2591) reçue de façon coulissante entre le limiteur (251) et la base (134), une partie tête (2592) perpendiculaire à la partie corps (2591), et une partie queue (2593) parallèle à la partie corps (2591) ; dans lesquels la rainure (2594) est formée dans la partie queue (2593).

19. Ensemble armature pourvu d'un dispositif de sécurité (2), l'ensemble armature comprenant un premier étai (11), un second étai (12), un dispositif de verrouillage (13), et une pluralité de tiges (14-16) qui sont raccordées de façon pivotante, respectivement, au dispositif de verrouillage (13) ainsi qu'aux étais (11, 12), **caractérisé en ce que**
le dispositif de sécurité (2) est selon une quelconque des revendications 1 à 18, dans lequel, lorsque l'ensemble actionneur (25) est actionné et le dispositif de verrouillage (13) est déverrouillé, les barres (21, 22) ainsi que les tiges (14-16) peuvent être tournées de façon pivotante pour que le premier étai (11) soit déplacé vers le second étai (12) et que l'ensemble armature soit aplati.

20. Ensemble armature pourvu d'un dispositif de sécurité selon la revendication 19, dans lequel le dispositif de verrouillage (13) comprend une base (134) ainsi qu'un coulisseau (135), et l'ensemble armature comprend en outre une pluralité de premières tiges (14-16) raccordées de façon pivotante, respectivement, à la base (134) ainsi qu'aux étais (11, 12) et une pluralité de deuxièmes tiges (15) raccordées de façon pivotante, respectivement, au coulisseau (135) ainsi qu'aux étais (11, 12).

21. Ensemble armature pourvu d'un dispositif de sécurité selon la revendication 20, dans lequel le dispositif de verrouillage (13) comprend en outre un sous-ensemble pédale (136), et l'ensemble armature comprend en outre une pluralité de troisièmes tiges (16) raccordées de façon pivotante, respectivement, au sous-ensemble pédale (136) ainsi qu'aux étais (11, 12).

22. Ensemble armature pourvu d'un dispositif de sécurité selon la revendication 20, dans lequel le dispositif de verrouillage (13) comprend en outre un poteau de guidage (132) le long duquel le coulisseau (135) peut coulisser.

23. Ensemble armature pourvu d'un dispositif de sécurité selon la revendication 22, dans lequel le dispositif de verrouillage (13) comprend en outre une troisième pièce élastique (133) qui est reçue à l'intérieur du poteau de guidage (132) et est partiellement en saillie à l'extérieur du poteau de guidage (132) pour que la troisième pièce élastique (133) soit en prise avec le coulisseau (135).

24. Ensemble armature pourvu d'un dispositif de sécurité selon la revendication 23, dans lequel, lorsque le poteau de guidage (132) est actionné, la troisième pièce élastique (133) est co-actionnée pour que la troisième pièce élastique (133) soit séparée du coulisseau (135) pour permettre au coulisseau (135) de coulisser le long du poteau de guidage (132).
